(19) **Europäisches Patentamt**
**European Patent Office**
**Office européen des brevets**

(11) **EP 2 109 758 B1**

(12) **EUROPEAN PATENT SPECIFICATION**

(45) Date of publication and mention
of the grant of the patent:
**21.06.2017 Bulletin 2017/25**

(51) Int Cl.:
*G01J 3/10* (2006.01)   *G01J 3/447* (2006.01)
*G01J 4/00* (2006.01)   *G01N 21/21* (2006.01)

(21) Application number: **08726833.0**

(22) Date of filing: **14.03.2008**

(86) International application number:
**PCT/US2008/003396**

(87) International publication number:
**WO 2008/115417 (25.09.2008 Gazette 2008/39)**

(54) **SYSTEM AND METHOD FOR CONTROLLING INTENSITY OF A BEAM OF ELECTROMAGNETIC RADIATION IN ELLIPSOMETERS AND POLARIMETERS**

SYSTEM UND VERFAHREN ZUR STEUERUNG DER INTENSITÄT EINES STRAHLS VON ELEKTROMAGNETISCHER STRAHLUNG IN ELLIPSOMETERN UND POLARIMETERN

SYSTÈME ET PROCÉDÉ POUR CONTRÔLER L'INTENSITÉ D'UN FAISCEAU DE RAYONNEMENT ÉLECTROMAGNÉTIQUE DANS DES ELLIPSOMÈTRES ET POLARIMÈTRES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **19.03.2007 US 918633 P**

(43) Date of publication of application:
**21.10.2009 Bulletin 2009/43**

(73) Proprietor: **J.A. WOOLLAM CO. INC.**
**Lincoln NE 68508 (US)**

(72) Inventors:
• **PFEIFFER. Galen L.**
**Lincoln**
**Nebraska 68521 (US)**
• **LIPHARDT, Martin M.**
**Lincoln**
**Nebraska 68523 (US)**

(74) Representative: **Beck Greener**
**Fulwood House**
**12 Fulwood Place**
**London WC1V 6HR (GB)**

(56) References cited:
**US-A- 6 002 485**   **US-B1- 6 181 421**
**US-B1- 6 275 323**   **US-B1- 6 456 376**
**US-B1- 7 158 231**

• **John Hanks: "Instruction Sheet for the PASCO Model OS-8520 Photometer", , 1 January 1995 (1995-01-01), pages 1-6, XP55016020, Retrieved from the Internet: URL:ftp://ftp.pasco.com/Support/Documents/English/OS/OS-8520/012-05631a.pdf [retrieved on 2012-01-10]**
• **HAUGE P S: "RECENT DEVELOPMENTS IN INSTRUMENTATION IN ELLIPSOMETRY", SURFACE SCIENCE, NORTH-HOLLAND PUBLISHING CO, AMSTERDAM, NL, vol. 96, 1 January 1980 (1980-01-01), pages 108-140, XP000195533, ISSN: 0039-6028, DOI: 10.1016/0039-6028(80)90297-6**
• **COLLINS R.W.: 'Automatic rotating element ellipsometers: Calibration, operation and real-time applications' REV. SCI. INSTRUM. vol. 61, no. 8, 01 August 1990, pages 2029 - 2062, XP000149453**

EP 2 109 758 B1

**Description**

BACKGROUND

It is known that sources of electromagnetic radiation provide non-constant output intensity vs. wavelength characteristics. Further, it is known that detectors of electromagnetic radiation become saturated when too high an intensity is input thereto. Where the intensity of one or more a wavelengths in a spectrum of wavelengths is high enough to saturate a detector, one approach is to attenuate the intensity of all wavelengths. This can be accomplished by a Neutral density filter. Neutral density filters, however, do not pass UV wavelengths and problems can develop using this approach in that reducing the intensity of the highest intensity wavelengths causes reduction of the intensity of other wavelengths below that which a detector can detect. It is also known to cause a beam to reflect off, for instance, a silicon substrate with an oxide on its surface, to provide emphasized IR and UV wavelength intensities with respect to Visible wavelengths, but across the board attenuation is typically not realized by this approach. Another approach to generally reducing intensity is to pass a beam of electromagnetic radiation through an iris which can be reduced in opening size, however, cross-sectional non-uniformity in the beam can lead to non-uniform results when this approach is used because of varying placement of the iris in the beam.

It is also disclosed that ellipsometer and polarimeters and the like typically comprise a source of a beam of electromagnetic radiation, a beam polarizer, a beam analyzer and a detector arranged so that a beam provided by the source passes through the polarizer, impinges on a sample and the passes through he analyzer and into the detector. The beam polarizer sets a polarization state in said beam which is changed by interaction with a sample, and the analyzer selects polarization states which are passed to the detector for analysis.

As the present invention finds non-limiting application in the investigation of non-specular depolarizing samples, it is noted that non-specular refers to reflections which are not "mirror-like", and depolarizing samples are characterized by a depolarization parameter defined by 1.0 minus the square root of the sum of the squares of:

$$\% \ DEP \ = \ 1 \ - \ \sqrt{N^2 + C^2 + S^2}$$

where:

N = Cos (2$\psi$):
C = Sin (2$\psi$) cos ($\Delta$); and
S = Sin (2$\psi$) Sin ($\Delta$).

and $\psi$ and $\Delta$ are defined by the well known ellipsometry beam orthogonal component ratio equation:

$$\frac{r_p}{r_s} = \rho = \tan \Psi \cdot \exp(i \cdot \Delta)$$

As the system of the present invention includes "crossed-polarizers", U.S. Patents and Published Applications were identified which include the terms "crossed-polarizer" and "ellipsometry" or "ellipsometer", and are:

<div align="center">

PATENTS:

| | | | |
|---|---|---|---|
| 7,236,221; | 7,221,420; | 7,211,304; | 7,163,724; |
| 7,083,835; | 7,061,561; | 6,934,024; | 6,798,511; |
| 6,693,711; | 6,112,114; | 5,787,890; | 5,303,709; |
| 4,097,110; | 7,170,574; | | |

PUBLISHED APPLICATIONS:

| | | |
|---|---|---|
| 2006/0215158; | 2006/0203164; | 2006/0193975; |
| 2005/0286001; | 2005/0270459; | 2005/0270458; |
| 2005/0024561; | 2004/0189992; | 2004/0179158; |
| 2003/0227623; | 2003/0227623; | 2002/0091323; |

</div>

(continued)

| | | |
|---|---|---|
| 2006/0141466; | 2006/0115640; | 2006/0099135; |
| 2005/0270458; | 2005/0128391; | 2004/0208350; |
| 2004/0189992; | 2003/0227623; | 2002/0091323. |

It is believed that the foregoing identified prior art is the most relevant to be found and has as its major thrust the application of conventional ellipsometry to the measurement of various parameters such as are common to samples which demonstrate, for instance, low specular reflectance and/or which are depolarizing, (eg. solar cells). Even in view of the prior art, however, need remains for improved systems and improved methodology which better enable application of ellipsometry to the investigation of sample characterizing parameters of samples which, for instance, demonstrate low specular reflectance and/or which are depolarizing.

DISCLOSURE OF THE INVENTION

The present invention is disclosed in the context of an ellipsometer or polarimeter and the like which comprises a source of a beam of electromagnetic radiation, a beam polarizer, an analyzer, a detector, and optionally at least one system compensator positioned between the beam polarizer and the analyzer. The present invention adds a control polarizer, and a sequentially located control compensator, between the source of a beam of electromagnetic radiation and the beam polarizer in ellipsometer or polarimeter system, such that a beam of electromagnetic radiation provided by the source thereof passes through the control polarizer and the control compensator, then through the beam polarizer and impinge on a sample, interact therewith, (eg. typically reflect therefrom but possibly transmit therethrough), and then pass through the analyzer and into the detector. Again, the control polarizer is positioned before the beam polarizer and in use is rotated with respect to the beam polarizer to substantially uniformly attenuate the intensity of all wavelengths which pass through said beam polarizer. And again, the present invention can also position a control compensator between the control and beam polarizers, which control compensator is applied to cause selective attenuation of some wavelengths in the spectrum more than others.

The present invention then comprises a system for controlling the intensity of a beam of electromagnetic radiation as a function of wavelength, comprising a source of a polychromatic beam of electromagnetic radiation and a sequence of control and beam polarizers, said control and beam polarizers being rotatable with respect to one another. In use the beam polarizer is caused to set a polarization state in a beam exiting therefrom, and the control polarizer is rotated with respect to said beam polarizer to substantially uniformly control the intensity of the beam exiting the beam polarizer over a spectrum of wavelengths. The system further comprises a compensator between said control and beam polarizers which serves to cause selective attenuation of some wavelengths more than others in said spectrum of wavelengths. Said system further comprises an analyzer and a detector such that in use the polarized beam exiting said beam polarizer interacts with a sample and then passes through said analyzer and into said detector, and said system is an ellipsometer or polarimeter. Said system can further comprise at least one system compensator between said beam polarizer and said analyzer. (It is noted that where a Berek-type control compensator, which has its optical axis perpendicular to a surface thereof which a beam enters is used, the terminology "rotation" thereof should be interpreted to mean a tipping thereof to position the optical axis other than parallel to the locus of the beam which passes therethrough, and where the control compensator has its optical axis in the plane of a surface thereof which a beam enters is used, rotation should be of electromagnetism over a spectral range, comprising the steps of:

   a) providing a system for controlling the intensity of a beam of electromagnetic radiation as described above;

   b) setting a beam polarization state with the beam polarizer and rotating the control polarizer with respect thereto to control the intensity.

Said method further comprises providing a compensator between said control and beam polarizers which serves to selectively attenuate the intensity of some wavelengths in said spectrum more than others.

A typical procedure provides that the control and beam polarizers be rotated with respect to one another so that less intensity than is possible from the source, proceeds to the sample. This might be approached using a highly reflective test sample, for instance and the control polarizer adjusted to provide a non-saturating signal to the detector. When a less reflective sample is investigated, the control and beam polarizers can then be rotated with respect to one another so that greater intensity is applied to the less reflective sample. The control compensator can also be adjusted to further control the intensity vs. wavelength characteristic of a beam impinging on the sample.

For clarity, it is recited that the present invention comprises an ellipsometer or polarimeter system comprising means for controlling the intensity of a beam of electromagnetic radiation as a function of wavelength comprising:

a source of a polychromatic beam of electromagnetic radiation;

a sequence of a control polarizer, a control compensator and beam polarizer;

said control and beam polarizers and said control compensator being rotatable with respect to one another, said system further comprising:

an analyzer; and

a detector;

such that in use the polarized beam provided by said source which exits said beam polarizer, interacts with a sample and then passes through said analyzer and into said detector;
such that in use the beam polarizer is caused to set a polarization state in a beam exiting therefrom, and the control polarizer and control compensator can be rotated with respect to said beam polarizer to substantially uniformly control the intensity of the beam exiting the beam polarizer over a spectrum of wavelengths.

Said ellipsometer or polarimeter system can further comprise at least one system compensator between said beam polarizer and said analyzer.

The present invention also comprises a method of controlling the intensity of a beam of electromagnetism over a spectral range, comprising the steps of:

a) providing an ellipsometer or polarimeter system as described just above;

b) setting a beam polarization state with the beam polarizer and rotating the control polarizer and/or control compensator with respect thereto to control the intensity of said beam over the spectrum of wavelengths.

The invention will be better understood by reference to the Detailed Description Section of this Specification, in conjunction with the Drawings.

BRIEF DESCRIPTION OF THE DRAWINGS

Fig. 1 shows a system for controlling the intensity of a beam of electromagnetic radiation comprising a Source (LS) of a Beam (B) of Electromagnetism, a Control Polarizer (P2), an optional Control Compensator (C), a Beam Polarizer (P), a Sample (SAM), an Analyzer (A) and a Detector (DET).

Fig. 2 shows an arbitrary demonstrative effect on Intensity (I) of a Beam (B') as compared to the Intensity of Beam (B) provided by a Source (LS) in Fig. 1.

DETAILED DESCRIPTION

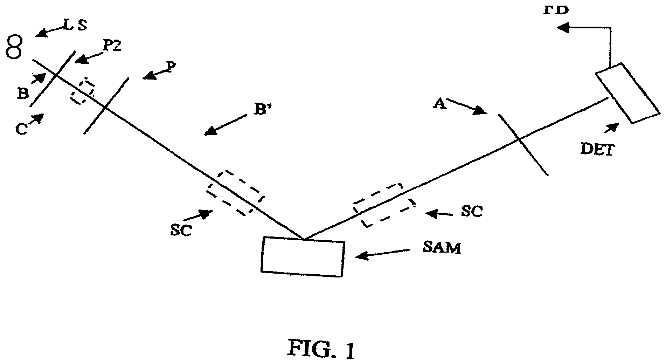

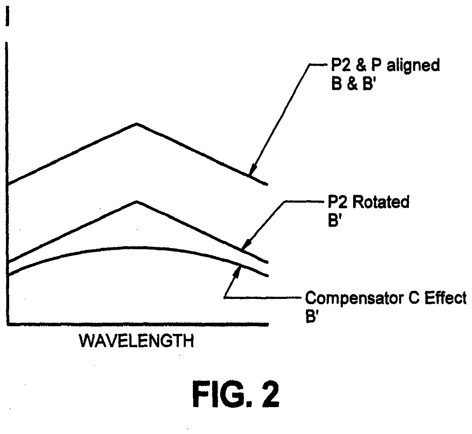

Fig. 1 shows a Source (LS) of a Beam (B) of Electromagnetism, a Control Polarizer (P2), a Compensator (C), a Beam Polarizer (P), a Sample (SAM), an Analyzer (A) and a Detector (DET). Fig. 2 shows an arbitrary demonstrative effect on Intensity (I) of a Beam (B') as compared to the Intensity of Beam (B) provided by a Source (LS). Note the baseline Intensity (I) when said Control and Beam Polarizers (P2) and (P) aligned, and that rotating the Control Polarizer (P2) with respect to the beam Polarizer (P) has a uniform effect over the Wavelength Spectrum. Adding a Control Compensator (C) causes selective increased attenuation of the mid-wavelength region and provide a more uniform Intensity Spectrum. Note also that at least one System Compensator (SC) can be incorporated into the system. (It is noted that where a Berek-type control compensator, which has its optical axis perpendicular to a surface thereof which a beam enters is used, the terminology "rotation" thereof should be interpreted to mean a tipping thereof to position the optical axis other than parallel to the locus of the beam which passes therethrough, and where the control compensator has its optical axis in the plane of a surface thereof which a beam enters is used, rotation should be interpreted to means an actual rotation about a perpendicular to said surface).

Finally, it is disclosed that rotation of the control polarizer or compensator can be automated, optionally via a signal in a feedback circuit (FB).

Having hereby disclosed the subject matter of the present invention, it should be obvious that many modifications, substitutions, and variations of the present invention are possible in view of the teachings. It is therefore to be understood that the invention may be practiced other than as specifically described, and should be limited in its breadth and scope only by the Claims.

## Claims

1.  An ellipsometer or polarimeter comprising a source (LS) of a polychromatic beam of electromagnetic radiation and, in a sequence, a control polarizer (P2) and a beam polarizer (P), said control (P2) and beam (P) polarizers being rotatable with respect to one another, the beam polarizer (P) being arranged to set the polarization state in a beam exiting therefrom, and the control polarizer (P2) being rotatable with respect to the beam polarizer (P) to substantially uniformly control the intensity of the beam exiting the beam polarizer (P) over a spectrum of wavelengths, and further comprising an analyzer (A) and a detector (DET) such that a polarized beam exiting the beam polarizer (P) interacts with a sample (SAM) and then passes through the analyzer (A) and into the detector (DET);
    the ellipsometer or polarimeter being **characterised in** further comprising a control compensator (C) provided between the control polarizer (P2) and the beam polarizer (P) which serves to cause selective attenuation of some wavelengths more than others in the spectrum of wavelengths.

2.  An ellipsometer or polarimeter as claimed in Claim 1, further comprising a system compensator (SC) between the beam polarizer (P) and the analyzer (A).

3.  A method of controlling the intensity of a beam of electromagnetic radiation, comprising:

    a) providing an ellipsometer or polarimeter to control the intensity of a beam of electromagnetic radiation as a function of wavelength comprising, a source (LS) of a polychromatic beam of electromagnetic radiation and, in sequence a control polarizer (P2) and a beam polarizer (P), the control and beam polarizers being rotatable with respect to one another, the beam polarizer (P) being arranged to set the polarization state in a beam exiting therefrom, and the control polarizer (P2) being rotatable with respect to the beam polarizer (P) to substantially uniformly control the intensity of the beam exiting the beam polarizer (P) over a spectrum of wavelengths; and the ellipsometer or polarimeter further comprising an analyzer (A) and a detector (DET) such that a polarized beam exiting the beam polarizer (P) interacts with a sample (SAM) and then passes through the analyzer (A) and into the detector (DET);
    b) setting a beam polarization state with the beam polarizer (P) and rotating the control polarizer (P2) with respect thereto to substantially uniformly control the intensity of said beam over a spectrum of wavelengths,

    **characterised in that** the ellipsometer or polarimeter further comprises a control compensator (C) provided between the control polarizer (P2) and the beam polarizer (P), and **in that** the method further comprises applying the control compensator (C) to selectively attenuate the intensity of some wavelengths in the spectrum more than others.

4.  A method as claimed in Claim 3, wherein the rotation of the control polarizer (P2) is automated.

5.  A method as claimed in Claim 4, wherein the rotation of the control polarizer (P2) is automated via a feedback circuit.

6.  A method as claimed in Claim 3, wherein the rotation of the control compensator (C) is automated.

7.  A method as claimed in Claim 6, wherein the rotation of the control compensator (C) is automated via a feedback circuit.

## Patentansprüche

1.  Ellipsometer oder Polarimeter, umfassend eine Quelle (LS) eines polychromatischen Strahls elektromagnetischer Strahlung und, in einer Sequenz, einen Steuerpolarisator (P2) und einen Strahlpolarisator (P), wobei der Steuer- (P2) und Strahlpolarisator (P) in Bezug aufeinander drehbar sind, wobei der Strahlpolarisator (P) angeordnet ist, um den Polarisationszustand in einem aus ihm hervorgehenden Strahl festzulegen, und der Steuerpolarisator (P2) in Bezug auf den Strahlpolarisator (P) drehbar ist, um die Intensität des Strahls im Wesentlichen gleichförmig zu steuern, welcher aus dem Strahlpolarisator (P) über ein Spektrum von Wellenlängen austritt, und

ferner umfassend einen Analysator (A) und einen Detektor (DET), so dass ein polarisierter Strahl, welcher aus dem Strahlpolarisator (P) austritt, mit einer Probe (SAM) interagiert und dann den Analysator (A) passiert und in den Detektor (DET) gelangt;

das Ellipsometer oder Polarimeter **dadurch gekennzeichnet, dass** es ferner einen Steuerkompensator (C) umfasst, welcher zwischen dem Steuerpolarisator (P2) und dem Strahlpolarisator (P) bereitgestellt ist, welcher dazu dient, selektive Dämpfung von einigen Wellenlängen mehr als von anderen im Spektrum der Wellenlängen hervorzurufen.

2. Ellipsometer oder Polarimeter nach Anspruch 1, ferner umfassend einen Systemkompensator (SC) zwischen dem Strahlpolarisator (P) und dem Analysator (A).

3. Verfahren der Steuerung der Intensität eines Strahls elektromagnetischer Strahlung, umfassend:

(a) Bereitstellen eines Ellipsometers oder Polarimeters, um die Intensität eines Strahls elektromagnetischer Strahlung als eine Wellenlängenfunktion zu steuern, umfassend eine Quelle (LS) eines polychromatischen Strahles und, in einer Sequenz, einen Steuerpolarisator (P2) und einen Strahlpolarisator (P), wobei der Steuer- und Strahlpolarisator in Bezug aufeinander drehbar sind, wobei der Strahlpolarisator (P) angeordnet ist, um den Polarisationszustand in einem aus ihm hervorgehenden Strahl festzulegen, und der Steuerpolarisator (P2) in Bezug auf den Strahlpolarisator (P) drehbar ist, um die Intensität des Strahls im Wesentlichen gleichförmig zu steuern, welcher aus dem Strahlpolarisator (P) über ein Spektrum von Wellenlängen austritt; und das Ellipsometer oder Polarimeter ferner umfassend einen Analysator (A) und einen Detektor (DET), so dass ein polarisierter Strahl, welcher aus dem Strahlpolarisator (P) austritt, mit einer Probe (SAM) interagiert und dann den Analysator (A) passiert und in den Detektor (DET) gelangt;

(b) Festlegen eines Strahlpolarisationszustands mit dem Strahlpolarisator (P) und Rotieren des Steuerpolarisators (P2) in Bezug dazu, um die Intensität des Strahls über ein Spektrum von Wellenlängen im Wesentlichen gleichförmig zu steuern,

**dadurch gekennzeichnet, dass** das Ellipsometer oder Polarimeter ferner einen Steuerkompensator (C) umfasst, welcher zwischen dem Steuerpolarisator (P2) und dem Strahlpolarisator (P) bereitgestellt ist, und dadurch, dass das Verfahren ferner das Anwenden des Steuerkompensators (C) umfasst, um selektiv die Intensität von einigen Wellenlängen im Spektrum mehr als andere zu dämpfen.

4. Verfahren nach Anspruch 3, wobei die Drehung des Steuerpolarisators (P2) automatisiert ist.

5. Verfahren nach Anspruch 4, wobei die Drehung des Steuerpolarisators (P2) über einen Rückkopplungskreis automatisiert ist.

6. Verfahren nach Anspruch 3, wobei die Drehung des Steuerkompensators (C) automatisiert ist.

7. Verfahren nach Anspruch 6, wobei die Drehung des Steuerkompensators (C) über einen Rückkopplungskreis automatisiert ist.

**Revendications**

1. Ellipsomètre ou polarimètre comprenant une source (LS) d'un faisceau polychrome de rayonnement électromagnétique, et, en séquence, un polariseur de contrôle (P2) et un polariseur de faisceau (P), lesdits polariseurs de contrôle (P2) et de faisceau (P) étant rotatifs l'un par rapport à l'autre, le polariseur de faisceau (P) étant agencé de façon à établir l'état de polarisation dans un faisceau en sortant, et le polariseur de contrôle (P2) étant rotatif relativement au polariseur de faisceau (P) de façon à contrôler de façon substantiellement uniforme l'intensité du faisceau sortant du polariseur de faisceau (P) dans un spectre de longueurs d'onde, et comprenant en outre un analyseur (A) et un détecteur (DET) de sorte qu'un faisceau polarisé sortant du polariseur de faisceau (P) interagisse avec un échantillon (SAM) pour passer ensuite dans l'analyseur (A) puis dans le détecteur (DET) ;

l'ellipsomètre ou le polarimètre étant **caractérisés par le fait qu'**ils comprennent en outre un compensateur de contrôle (C) placé entre le polariseur de contrôle (P2) et le polariseur de faisceau (P), et servant à donner lieu à une atténuation sélective de certaines longueurs d'onde plus que d'autres dans le spectre de longueurs d'onde.

2. Ellipsomètre ou polarimètre selon la revendication 1, comprenant en outre un compensateur de système (SC) entre le polariseur de faisceau (P) et l'analyseur (A).

3. Méthode de régulation de l'intensité d'un faisceau de rayonnement électromagnétique, comprenant :

a) la fourniture d'un ellipsomètre ou d'un polarimètre pour réguler l'intensité d'un faisceau de rayonnement électromagnétique en fonction de la longueur d'onde, comprenant une source (LS) d'un faisceau polychrome de rayonnement électromagnétique, et, en séquence, un polariseur de contrôle (P2) et un polariseur de faisceau (P), les polariseurs de contrôle et de faisceau étant rotatifs l'un par rapport à l'autre, le polariseur de faisceau (P) étant agencé pour régler l'état de polarisation dans un faisceau en sortant, et le polariseur de contrôle (P2) étant rotatif relativement au polariseur de faisceau (P) de façon à procéder à une régulation substantiellement uniforme de l'intensité du faisceau sortant du polariseur de faisceau (P) dans un spectre de longueurs d'onde ; et l'ellipsomètre ou le polarimètre comprenant en outre un analyseur (A) et un détecteur (DET), de sorte qu'un faisceau polarisé sortant du polariseur de faisceau (P) interagisse avec un échantillon (SAM) puis traverse l'analyseur (A) et passe dans le détecteur (DET) ;
b) le réglage d'un état de polarisation du faisceau avec le polariseur de faisceau (P), et la rotation du polariseur de contrôle (P2) relativement à celui-ci pour réguler de façon substantiellement uniforme l'intensité dudit faisceau dans un spectre de longueurs d'onde,

**caractérisé en ce que** l'ellipsomètre ou le polarimètre comprennent en outre un compensateur de contrôle (C) placé entre le polariseur de contrôle (P2) et le polariseur de faisceau (P), et **en ce que** la méthode comprend en outre l'application du compensateur de contrôle (C) pour effectuer une atténuation sélective de l'intensité de certaines longueurs d'onde plus que d'autres dans le spectre de longueurs d'onde.

4. Méthode selon la revendication 3, la rotation du polariseur de contrôle (P2) étant automatisée.

5. Méthode selon la revendication 4, la rotation du polariseur de contrôle (P2) étant automatisée à travers un circuit à rétroaction.

6. Méthode selon la revendication 3, la rotation du compensateur de contrôle (C) étant automatisée.

7. Méthode selon la revendication 6, la rotation du compensateur de contrôle (C) étant automatisée à travers un circuit à rétroaction.

FIG. 1

FIG. 2